# EUROPEAN PATENT APPLICATION

(11) **EP 4 061 058 A1**
(43) Date of publication of application: **21.09.2022**
(21) Application number: 19952227.7
(22) Date of filing: 14.11.2019
(51) Int. Cl.: H04W 48/10

(54) **INFORMATION INDICATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); XU, Weijie, Dongguan, Guangdong 523860 (CN)
(74) Representative: Taor, Simon Edward William
(86) International application number: PCT/CN2019/118565
(87) International publication number: WO 2021/092864

(57) **Abstract**

Provided in the embodiments of the present application are an information indication method and apparatus, a terminal device, and a network device. The method comprises: a terminal device receives a first broadcast message sent by a first cell, the first broadcast message carrying first indication information, and the first indication information being used to indicate whether the first cell is allowed to access a terminal device of a first type.

## Description

### TECHNICAL FIELD

Embodiments of the present disclosure relate to the field of mobile communication technologies, and in particular, to a method and apparatus for indicating information, a terminal device, and a network device.

### BACKGROUND

NR-light type terminal devices are introduced in New Radio (NR) Release 17 (R17). Compared with enhanced Mobile Broadband (eMBB) type terminal devices, the NR-light type terminal devices require lower device cost and complexity. Due to the introduction of the NR-light type terminal devices, it is necessary to consider how the NR-light type terminal devices access NR cells without affecting traditional terminal devices (such as the eMBB type terminal devices) accessing the NR cells.

### SUMMARY

Embodiments of the present disclosure provide a method and apparatus for indicating information, a terminal device, and a network device.

A method for indicating information provided by the embodiments of the present disclosure includes:

receiving, by a terminal device, a first broadcast message sent by a first cell, wherein the first broadcast message carries first indication information, and the first indication information is used to indicate whether a first type of terminal device is allowed to access the first cell.

A method for indicating information provided by the embodiments of the present disclosure includes:
sending, by a network device, a first broadcast message, wherein the first broadcast message carries first indication information, and the first indication information is used to indicate whether a first type of terminal device is allowed to access a first cell.

An apparatus for indicating information provided by the embodiments of the present disclosure is applied to a terminal device, and the apparatus includes:
a receiving unit, configured to receive a first broadcast message sent by a first cell, wherein the first broadcast message carries first indication information, and the first indication information is used to indicate whether a first type of terminal device is allowed to access the first cell.

An apparatus for indicating information provided by the embodiments of the present disclosure is applied to a network device, and the apparatus includes:
a sending unit, configured to send a first broadcast message, wherein the first broadcast message carries first indication information, and the first indication information is used to indicate whether a first type of terminal device is allowed to access a first cell.

A terminal device provided by the embodiments of the present disclosure includes a processor and a memory. The memory is configured to store a computer program, and the processor is configured to call and run the computer program stored in the memory to perform the method for indicating the information as described above.

A network device provided by the embodiments of the present disclosure includes a processor and a memory. The memory is configured to store a computer program, and the processor is configured to call and run the computer program stored in the memory to perform the method for indicating the information as described above.

A chip provided by the embodiments of the present disclosure is configured to implement the method for indicating the information as described above.

Specifically, the chip includes a processor configured to call and run a computer program from a memory, to cause a device installed with the chip to perform the method for indicating the information described above.

A computer-readable storage medium provided by the embodiments of the present disclosure is configured to store a computer program that causes a computer to perform the method for indicating the information as described above.

A computer program product provided by the embodiments of the present disclosure includes computer program instructions that cause a computer to perform the method for indicating the information as described above.

A computer program provided by the embodiments of the present disclosure, when running on a computer, causes the computer to perform the method for indicating the information as described above.

Through the above technical solutions, the network side indicates whether the first type of terminal device (such as a NR-light type terminal device) is allowed to access the first cell, so that different types of terminal devices can use different radio public resources, achieving a purpose of the same cell being compatible with multiple types of terminal devices.

### BRIEF DESCRIPTION OF THE DRAWINGS

The drawings described herein are used to provide further understanding of the present disclosure and constitute a part of the present disclosure. The exemplary embodiments of the present disclosure and description thereof are used to explain the present disclosure and do not constitute an improper limitation of the present disclosure. In the drawings:
FIG. 1 is a schematic diagram of a communication system architecture provided by an embodiment of the present disclosure;
FIG. 2 is a schematic flowchart of a method for indicating information provided by an embodiment of the present disclosure;
FIG. 3 is a first schematic diagram of a structural composition of an apparatus for indicating information provided by an embodiment of the present disclosure;
FIG. 4 is a second schematic diagram of a structural composition of an apparatus for indicating information provided by an embodiment of the present disclosure;
FIG. 5 is a schematic structural diagram of a communication device provided by an embodiment of the present disclosure;
FIG. 6 is a schematic structural diagram of a chip according to an embodiment of the present disclosure; and
FIG. 7 is a schematic block diagram of a communication system provided by an embodiment of the present disclosure.

### DETAILED DESCRIPTION

The technical solutions in the embodiments of the present disclosure will be described below in connection with the drawings in the embodiments of the present disclosure. Obviously, the embodiments described are part of the embodiments of the present disclosure, but not all the embodiments. All other embodiments obtained by those of ordinary skill in the art based on the embodiments in the present disclosure without creative work fall within the protection scope of the present disclosure.

The technical solutions of the embodiments of the present disclosure can be applied to various communication systems, such as a Long Term Evolution (LTE) system, a LTE Frequency Division Duplex (FDD) system, a LTE Time Division Duplex (TDD) system, a 5G system, a future communication system, etc..

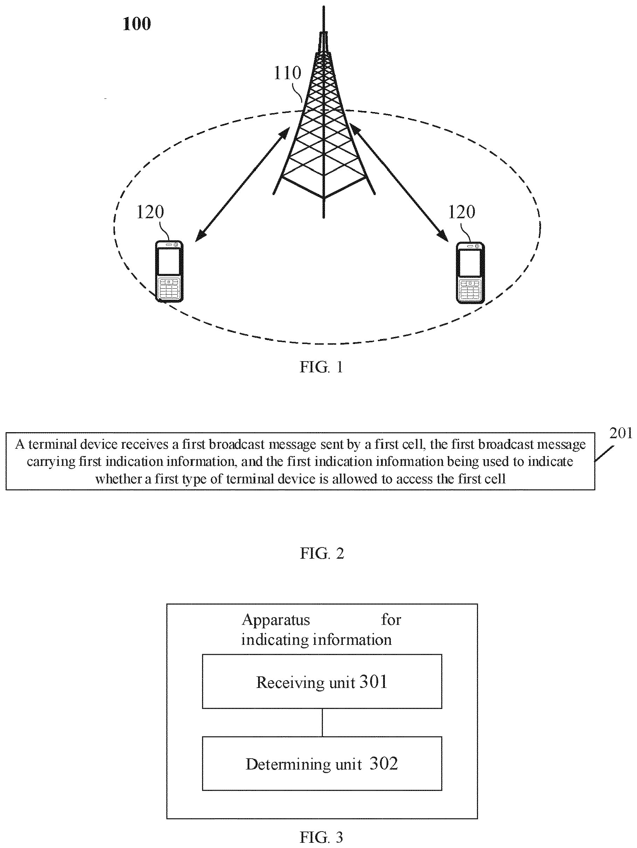

For example, a communication system 100 to which the embodiments of the present disclosure are applied is as shown in FIG. 1. The communication system 100 may include a network device 110 which may be a device that communicates with a terminal 120 (or referred to as a communication terminal or a terminal). The network device 110 can provide communication coverage for a specific geographic area, and can communicate with terminals located in the coverage area. Optionally, the network device 110 can be an Evolutional Node B (eNB or eNodeB) in a LTE system, or a wireless controller in a Cloud Radio Access Network (CRAN), or the network device can be a mobile switching center, a relay station, an access point, an on-board device, a wearable device, a hub, a switch, a bridge, a router, a network side device in 5G network, a network device in a future communication system, or the like.

The communication system 100 also includes at least one terminal 120 located within the coverage area of the network device 110. As used herein, the term "terminal" includes, but is not limited to, a device which communicates via a wired line connection, such as a public switched telephone networks (PSTN), a digital subscriber line (DSL), a digital cable, and a direct cable connection; via another data connection/network; via a wireless interface, such as those for a cellular network, a wireless local area network (WLAN), a digital TV network such as a DVB-H network, a satellite network or an AM- FM broadcast transmitter; via a device of another terminal that is configured to receive/send communication signals; and/or an Internet of Things (IoT) device. The terminal that is configured to communicate through a wireless interface may be referred to as a "wireless communication terminal", a "wireless terminal" or a "mobile terminal". Examples of the mobile terminal include but are not limited to a satellite or cellular phone; a Personal Communications System (PCS) terminal that can combine cellular radio phones with data processing, fax, and data communication capabilities; a PDA that may include radio phones, pagers, Internet/intranet access, a Web browser, a memo pad, a calendar, and/or a Global Positioning System (GPS) receiver; and conventional laptop and/or palmtop receivers or other electronic devices including radio telephone transceivers. The terminal may refer to an access terminal, user equipment (UE), a user unit, a user station, a mobile station, a mobile console, a remote station, a remote terminal, a mobile device, a user terminal, a terminal, a wireless communication device, a user agent, or a user device. The access terminal may be a cellular phone, a cordless phone, a Session Initiation Protocol (SIP) phone, a wireless local loop (WLL) station, a personal digital assistant (PDA), and a handheld device with wireless communication function, a computing device or other processing devices connected to wireless modems, in-vehicle devices, wearable devices, terminals in 5G networks, terminals in the future evolution ofPLMN, or the like.

Optionally, Device to Device (D2D) communication may be performed between the terminals 120.

Optionally, the 5G system or 5G network may also be referred to as a New Radio (NR) system or NR network.

FIG. 1 illustrates one network device and two terminals. Optionally, the communication system 100 may include multiple network devices, and other numbers of terminals may be included within the coverage area of each network device, which is not limited in embodiments of the present disclosure.

Optionally, the communication system 100 may include other network entities such as a network controller, and a mobile management entity, which is not limited in embodiments of the present disclosure.

It should be understood that, a device with a communication function in a network/system in the embodiments of the present disclosure may be referred to as a communication device. For example, as for the communication system 100 shown in FIG. 1, the communication device may include the network device 110 and the terminals 120 which have communication functions, and the network device 110 and the terminals 120 may be the specific devices described above, which will not be described herein again. The communication device may also include other devices in the communication system 100, such as the network controller, the mobile management entity, and other network entities, which is not limited in the embodiments of the present disclosure.

It should be understood that the terms "system" and "network" are often used interchangeably herein. The term "and/or" used herein is merely to describe relative relationships of relative objects, indicating that there can be three kinds of relationships. For example, A and/or B can indicate three cases where A exists alone, A and B exist simultaneously, or B exists alone. In addition, the character "/" used herein generally indicates that the related objects before and after this character are in an "or" relationship.

In order to facilitate the understanding of the technical solutions of the embodiments of the present disclosure, the technical solutions related to the embodiments of the present disclosure are described below.

With people's pursuit of speed, delay, high-speed mobility, and energy efficiency, as well as diversity and complexity of business in future life, the international standard organization of 3rd Generation Partnership Project (3GPP) began to develop 5G. 5G mainly applies to the following scenarios: enhanced Mobile Broadband (eMBB), Ultra Reliable Low Latency Communication (URLLC), and massive Machine Type Communication (mMTC).

On the one hand, eMBB is still aimed at allowing users to obtain multimedia content, services, and data, and its demand is growing rapidly. On the other hand, because eMBB may be deployed in different scenarios, such as indoor, urban, and rural areas, its capability and requirement vary greatly. Therefore, it cannot be generalized, and detailed analysis in conjunction with specific deployment scenarios is required. Typical applications of URLLC include: industrial automation, electric power automation, telemedicine operation (surgery), traffic safety guarantee, and the like. Typical characteristics of mMTC include: high connection density, small data volume, latency-insensitive services, low cost and long service life of modules, and the like.

NR-light type terminal devices have been introduced in NR R17. The NR-light type terminal devices mainly have the following three scenarios:

Industrial Wireless Sensors: compared with URLLC type terminal devices, the industrial wireless sensors have relatively low latency and reliability requirements. In addition, cost and power consumption of the industrial wireless sensors are also lower than those of the URLLC type terminal devices and the eMBB type terminal devices.

Video surveillance: it is mainly used in video surveillance scenarios such as smart cities and industrial factories. Collection and processing of data in the smart cities facilitate more effective monitoring and control of urban resources and provide more effective services to urban residents.

Wearables: including smart watches, electronic health devices, and some medical monitoring devices. One commonality of these devices is a small size.

Common requirements of the above three scenarios are: 1) compared with the R15/16 eMBB type terminal devices, the NR-light type terminal devices require lower device cost and complexity. A basic consensus is to reduce bandwidth and reception antennas. 2) The NR-light type terminal devices have a relative small size. 3) The NR-light type terminal devices are required to achieve the coverage equivalent to that of the R15/16 eMBB type terminal devices, and coverage losses due to the reduction of the reception antennas, the bandwidth and the power level or other reductions in complexity of the terminal device need to be compensated for.

For the above three scenarios, each scenario has the following individual requirements: 1) a reliability requirement of the industrial wireless sensors is 99.99%, and an end-to-end delay requirement is 100ms. A bit rate requirement is 2Mbps. The device is stationary. Battery life is several years. For safety-related sensors, the latency requirement is 5-10ms. 2) The bit rate requirement for the video surveillance is 2-4Mbps, the delay requirement is less than 500ms, and the reliability requirement is 99-99.9%. The rate requirement is 2-4Mbps for some advanced videos. The amount of services upstream is relatively large. 3) Wearables can refer to LTE Cat 4, and the rate requirement is 150 Mbps/50 Mbps.

Due to the introduction of the NR-light type terminal devices, it is necessary to consider the compatibility of NR cell with the NR-light type terminal devices without affecting the access of traditional terminal devices (such as the eMBB type terminal devices) to the NR cells. To this end, it is necessary to consider how to take into account the needs of both the traditional terminal devices and the NR-light type terminal devices to access the NR cell. In consideration of a low bandwidth requirement of the NR-light type terminal devices, it is necessary to design different types of cell bandwidths, especially different designs of transmission bandwidths for public resources and public information transmission. To this end, the following technical solutions of the embodiments of the present disclosure are proposed. An objective of the technical solutions of the embodiments of the present disclosure is to instruct different types of terminal devices to use different public resources by a network side, thereby achieving the purpose of the same NR cell being compatible with multiple types of terminal devices.

FIG. 2 is a schematic flowchart of a method for indicating information provided by an embodiment of the present disclosure. As shown in FIG. 2 , the method for indicating the information includes the following step:
in step 201, a terminal device receives a first broadcast message sent by a first cell, where the first broadcast message carries first indication information and the first indication information is used to indicate whether a first type of terminal device is allowed to access the first cell.

In the embodiments of the present disclosure, a network device sends the first broadcast message, and the terminal device receives the first broadcast message. The network device may be a base station, such as a gNB. Further, a cell covered by the base station includes at least the first cell.

In the embodiments of the present disclosure, the first cell may be, but is not limited to, a NR cell.

In an optional implementation of the present disclosure, the first broadcast message is a Master Information Block (MIB) message.

In an optional implementation of the present disclosure, the first type of terminal device includes a NR-light type terminal device.

In the embodiments of the present disclosure, the first broadcast message carries the first indication information, and if a value of the first indication information is a first value, it indicates that the first type of terminal device is allowed to access the first cell; or, if the value of the first indication information is a second value, it indicates that the first type of terminal device is not allowed to access the first cell.

For example, the network side carries the first indication information in the MIB, which is used to indicate whether to allow the access of the NR-light type terminal device (or whether to support the access of the NR-light type terminal device). Referring to Table 1 below, the first indication information can be implemented by a spare bit in the MIB. If the spare bit is set to 1 (or 0), it indicates that the current cell supports the access of the NR-light type terminal device, and if the spare bit is set to 0 (or 1), it indicates that the current cell does not support the access of the NR-light type terminal device.

Further, in an optional implementation, the first broadcast message further carries second indication information, and the second indication information is used for the terminal device to obtain Remaining Minimum System Information (RMSI) information.

For example, the network side carries the second indication information in the MIB, which is used for the terminal device to obtain the RMSI information. Referring to Table 1 below, the second indication information may be implemented by pdcch-ConfigSIB1 in the MIB, and pdcch-ConfigSIB1 occupies 8 bits.

**Table 1**

| | | | |
|---|---|---|---|
| MIB ::= | | SEQUENCE { | |
| | systemFrameNumber | | BIT STRING (SIZE (6)), |
| | subCarrierSpacingCommon | | ENUMERATED {scs15or60, scs30or120}, |
| | ssb-SubcarrierOffset | | INTEGER (0.. 15), |
| | dmrs-TypeA-Position | | ENUMERATED {pos2, pos3}, |
| | pdcch-ConfigSIB 1 | | PDCCH-ConfigSIB1, |
| | cellBarred | | ENUMERATED {barred, notBarred}, |
| | intraFreqReselection | | ENUMERATED {allowed, notAllowed}, |
| | spare | | BIT STRING (SIZE (1)) |
| } | | | |

In the embodiments of the present disclosure, after obtaining the first broadcast message, the terminal device interprets the second indication information in the first broadcast message according to its own type, which will be described in detail below.

### • Case 1

In a case where the terminal device is the first type of terminal device, and the first indication information indicates that the first type of terminal device is allowed to access the first cell, the terminal device determines corresponding RMSI information in a first table according to the second indication information. The RMSI information includes at least one of the following: scheduling information of the RMSI and the number of repetitions of the RMSI.

In an optional implementation, the scheduling information of the RMSI includes at least one of the following: a Transport Block (TB) size, a Modulation and Coding Scheme (MCS), a time domain resource position, and a frequency domain resource position.

For example, if the spare bit in the MIB is set to 1, the interpretation of the 8 bits corresponding to pdcch-ConfigSIB1 for the NR-light type terminal device is different from the interpretation of the 8 bits corresponding to pdcch-ConfigSIB1 for the traditional terminal device (such as the eMBB type terminal device). The 8 bits corresponding to pdcch-ConfigSIB1 is interpreted by the traditional terminal device (such as the eMBB type terminal device) as determining the resource configuration information of the corresponding RMSI PDCCH in a general table (i.e., a third table) based on pdcch-ConfigSIB1. For the NR-light type terminal device, if the spare bit is set to 1, for the interpretation of the 8 bits corresponding to pdcch-ConfigSIB1, reference is made to a table defined by a protocol (i.e., the first table). The first table gives the scheduling information of the RMSI and/or the number of repetitions of the RMSI. After the terminal device obtains this information, it can directly receive the RMSI to obtain content of the RMSI without monitoring the RMSI PDCCH before receiving the RMSI (i.e., SIB1).

### • Case 2

In a case where the terminal device is the first type of terminal device, and the first indication information indicates that the first type of terminal device is allowed to access the first cell, the terminal device determines corresponding RMSI information in a second table according to the second indication information. The RMSI information includes resource configuration information of a first RMSI Physical Downlink Control Channel (PDCCH). The terminal device receives the first RMSI PDCCH according to the resource configuration information of the first RMSI PDCCH, and obtains the scheduling information of the RMSI and/or the number of repetitions of the RMSI from the first RMSI PDCCH.

In an optional implementation, the scheduling information of the RMSI includes at least one of the following: a TB size, a MCS, a time domain resource position, and a frequency domain resource position.

It should be noted that the second table is different from the third table, and the third table is used to determine resource configuration information of a second RMSI PDCCH for a second type of terminal device. In an optional implementation, the second type of terminal device is an eMBB type terminal device.

In an optional implementation, the first RMSI PDCCH is scrambled by first SI-RNTI. The first System Information Radio Network Temporary Identifier (SI-RNTI) is different from a second SI-RNTI, the second SI-RNTI is used to scramble the second RMSI PDCCH, and the second RMSI PDCCH is a RMSI PDCCH for the second type of terminal device.

For example, if the spare bit in the MIB is set to 1, the interpretation of the 8 bits corresponding to pdcch-ConfigSIB1 for the NR-light type terminal device is different from the interpretation of the 8 bits corresponding to pdcch-ConfigSIB1 for the traditional terminal device (such as the eMBB type terminal device). The 8 bits corresponding to pdcch-ConfigSIB1 is interpreted by the traditional terminal device (such as the eMBB type terminal device) as determining the resource configuration information of the corresponding RMSI PDCCH in a general table (i.e., a third table) based on pdcch-ConfigSIB1. For the NR-light type terminal device, if the spare bit is set to 1, for the interpretation of the 8 bits corresponding to pdcch-ConfigSIB1, reference is made to a table defined by a protocol (i.e., the second table). The second table gives the resource position information of the RMSI PDCCH, and the second table is suitable for the NR-light type terminal device. The general table (i.e., the third table) also provides the resource position information of the RMSI PDCCH, and the general table (i.e., the third table) is suitable for the traditional terminal device (e.g., the eMBB type terminal device). After the terminal device obtains the resource position information of the RMSI PDCCH, it can monitor the RMSI PDCCH and then receive the RMSI (i.e., SIB1). Optionally, a new SI-RNTI is defined for the NR-light type terminal device to scramble the corresponding RMSI PDCCH, and the terminal device uses the new SI-RNTI to receive the corresponding RMSI PDCCH. Here, the new SI-RNTI is different from the traditional SI-RNTI (i.e., FFFF), which is used to scramble the RMSI PDCCH corresponding to the traditional terminal device (such as eMBB type terminal device).

### • Case 3

In a case where the terminal device is the second type of terminal device, the terminal device determines corresponding RMSI information in the third table according to the second indication information. The RMSI information includes resource configuration information of a second RMSI PDCCH. The terminal device receives the second RMSI PDCCH according to the resource configuration information of the second RMSI PDCCH, and obtains the scheduling information of the RMSI and/or the number of repetitions of the RMSI from the second RMSI PDCCH.

In an optional implementation, the second type of terminal device is an eMBB type terminal device.

In an optional implementation, the scheduling information of the RMSI includes at least one of the following: a TB size, a MCS, a time domain resource position, and a frequency domain resource position.

For example, the 8 bits corresponding to pdcch-ConfigSIB1 is interpreted by the traditional terminal device (such as the eMBB type terminal device) as determining the resource configuration information of the corresponding RMSI PDCCH in a general table (i.e., a third table) based on pdcch-ConfigSIB1. After obtaining the resource position information of the RMSI PDCCH, the terminal device can monitor the RMSI PDCCH and then receive the RMSI (i.e., SIB1).

### • Case 4

In a case where the terminal device is the first type of terminal device, and the first indication information indicates that the first type of terminal device is allowed to access the first cell, the terminal device determines a bandwidth part occupied by a first RMSI PDCCH according to the second indication information. The first RMSI PDCCH occupies a first part in a first bandwidth, the first bandwidth is a bandwidth occupied by a search space of a second RMSI PDCCH, and the second RMSI PDCCH is a RMSI PDCCH for a second type of terminal device.

In a specific implementation, the terminal device determines the first bandwidth in the third table according to the second indication information; and the terminal device determines the first part of the first bandwidth in a fourth table according to the second indication information.

In an optional implementation, the first RMSI PDCCH is scrambled by the first SI-RNTI. The first System Information Radio Network Temporary Identifier (SI-RNTI) is different from a second SI-RNTI, the second SI-RNTI is used to scramble the second RMSI PDCCH, and the second RMSI PDCCH is a RMSI PDCCH for the second type of terminal device.

For example, if the spare bit in the MIB is set to 1, the interpretation of the 8 bits corresponding to pdcch-ConfigSIB1 for the NR-light type terminal device is different from the interpretation of the 8 bits corresponding to pdcch-ConfigSIB1 for the traditional terminal device (such as the eMBB type terminal device). The 8 bits corresponding to pdcch-ConfigSIB1 is interpreted by the traditional terminal device (such as the eMBB type terminal device) as determining the resource configuration information of the corresponding RMSI PDCCH in a general table (i.e., a third table) based on pdcch-ConfigSIB1. For the NR-light type terminal device, if the spare bit is set to 1, the interpretation of the 8 bits corresponding to pdcch-ConfigSIB1 is that the 8 bits are used to describe the bandwidth part occupied by the RMSI PDCCH corresponding to the NR-light type terminal device in the traditional search space (that is, a search space where the RMSI PDCCH corresponding to the eMBB type terminal device is located). The terminal device can determine bandwidth information of the search space in the third table according to pdcch-ConfigSIB1, and then determine which bandwidth part of the search space is occupied in the fourth table according to pdcch-ConfigSIB1.

FIG. 3 is a first schematic diagram of a structural composition of an apparatus for indicating information provided by an embodiment of the present disclosure. The apparatus is applied to a terminal device. As shown in FIG. 3, the apparatus for indicating the information includes:

a receiving unit 301, configured to receive a first broadcast message sent by a first cell, where the first broadcast message carries first indication information and the first indication information is used to indicate whether a first type of terminal device is allowed to access the first cell.

In an optional implementation, if a value of the first indication information is a first value, it indicates that the first type of terminal device is allowed to access the first cell; or,
if the value of the first indication information is a second value, it indicates that the first type of terminal device is not allowed to access the first cell

In an optional implementation, the first broadcast message further carries second indication information, and the second indication information is used by the terminal device to obtain RMSI information.

In an optional implementation, in a case where the terminal device is the first type of terminal device, and the first indication information indicates that the first type of terminal device is allowed to access the first cell, the apparatus further includes a determining unit 302, configured to determine corresponding RMSI information in a first table according to the second indication information, and the RMSI information includes at least one of the following: scheduling information of the RMSI and the number of repetitions of the RMSI.

In an optional implementation, in a case where the terminal device is the first type of terminal device, and the first indication information indicates that the first type of terminal device is allowed to access the first cell, the apparatus further includes a determining unit 302, configured to determine corresponding RMSI information in a second table according to the second indication information, where the RMSI information includes resource configuration information of a first RMSI PDCCH.

In an optional implementation, the receiving unit 301 is further configured to receive the first RMSI PDCCH according to the resource configuration information of the first RMSI PDCCH, and obtain scheduling information of the RMSI and/or the number of repetitions of the RMSI from the first RMSI PDCCH.

In an optional implementation, the second table is different from a third table, and the third table is used to determine resource configuration information of a second RMSI PDCCH for a second type of terminal device.

In an optional implementation, in a case where the terminal device is the second type of terminal device, the apparatus further includes a determining unit 302, configured to determine corresponding RMSI information in a third table according to the second indication information, where the RMSI information includes resource configuration information of a second RMSI PDCCH.

In an optional implementation, the receiving unit 301 is further configured to receive the second RMSI PDCCH according to the resource configuration information of the second RMSI PDCCH, and obtain scheduling information of the RMSI and/or the number of repetitions of the RMSI from the second RMSI PDCCH.

In an optional implementation, the second type of terminal device is an eMBB type terminal device.

In an optional implementation, the scheduling information of the RMSI includes at least one of the following: a TB size, a MCS, a time domain resource position, and a frequency domain resource position.

In an optional implementation, in a case where the terminal device is the first type of terminal device, and the first indication information indicates that the first type of terminal device is allowed to access the first cell, the apparatus further includes a determining unit 302, configured to determine a bandwidth part occupied by a first RMSI PDCCH according to the second indication information.

In an optional implementation, the first RMSI PDCCH occupies a first part of a first bandwidth, the first bandwidth is a bandwidth occupied by a search space of a second RMSI PDCCH, and the second RMSI PDCCH is a RMSI PDCCH for a second type of terminal device.

In an optional implementation, the determining unit 302 is configured to determine the first bandwidth in a third table according to the second indication information; and determine the first part of the first bandwidth in a fourth table according to the second indication information.

In an optional implementation, the first RMSI PDCCH is scrambled by a first SI-RNTI;
the first SI-RNTI is different from a second SI-RNTI, the second SI-RNTI is used to scramble a second RMSI PDCCH, and the second RMSI PDCCH is a RMSI PDCCH for the second type of terminal device.
the first RMSI PDCCH is scrambled by the first SI-RNTI;

In an optional implementation, the first broadcast message is a MIB message.

In an optional implementation, the first type of terminal device is a NR-light type terminal device.

It should be understood by those skilled in the art that the relevant description of the above-mentioned apparatus for indicating the information in the embodiments of the present disclosure can be understood by referring to the relevant description of the method for indicating the information in the embodiments of the present disclosure.

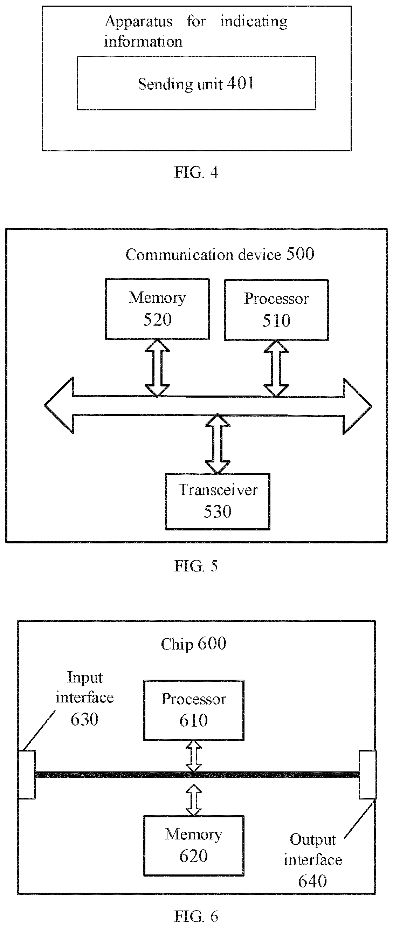

FIG. 4 is a second schematic diagram of a structural composition of an apparatus for indicating information provided by an embodiment of the present disclosure. The apparatus is applied to a network device. As shown in FIG. 4, the apparatus for indicating the information includes:
a sending unit 401, configured to send a first broadcast message, where the first broadcast message carries first indication information, and the first indication information is used to indicate whether a first type of terminal device is allowed to access a first cell.

In an optional implementation, if a value of the first indication information is a first value, it indicates that the first type of terminal device is allowed to access the first cell; or,
if the value of the first indication information is a second value, it indicates that the first type of terminal device is not allowed to access the first cell.

In an optional implementation, the first broadcast message further carries second indication information, and the second indication information is used by the terminal device to obtain RMSI information.

In an optional implementation, the first broadcast message is a MIB message.

In an optional implementation, the first type of terminal device is a NR-light type terminal device.

It should be understood by those skilled in the art that the relevant description of the above-mentioned apparatus for indicating the information in the embodiments of the present disclosure can be understood by referring to the relevant description of the method for indicating the information in the embodiments of the present disclosure.

FIG. 5 is a schematic structural diagram of a communication device 500 provided by an embodiment of the present disclosure. The communication device may be the terminal or the network device. The communication device 500 shown in FIG. 5 includes a processor 510, and the processor 510 can call and run a computer program from a memory to implement the methods in the embodiments of the present disclosure.

Optionally, as shown in FIG. 5, the communication device 500 can further include a memory 520. The processor 510 can call and run the computer program from the memory 520 to carry out the methods in the embodiments of the present disclosure.

The memory 520 can be a separate device independent of the processor 510, or can be integrated in the processor 510.

Optionally, as shown in FIG. 5, the communication device 500 can further include a transceiver 530, and the processor 510 can control the transceiver 530 to communicate with other devices, and specifically to transmit information or data to other devices, or receive information or data transmitted from other devices.

The transceiver 530 can include a transmitter and a receiver. The transceiver 530 can further include an antenna, and the number of the antennas can be one or more.

Optionally, the communication device 500 can specifically be the network device in the embodiments of the application, and the communication device 500 can implement the corresponding processes which are implemented by the network device in the methods according to the embodiments of the present disclosure, which will not be repeated here for the sake of brevity.

Optionally, the communication device 500 can specifically be the mobile terminal/terminal device in the embodiments of the application, and the communication device 500 can implement the corresponding processes which are implemented by the mobile terminal/terminal device in the methods according to the embodiments of the present disclosure, which will not be repeated here for the sake of brevity.

FIG. 6 is a schematic structural diagram of a chip according to an embodiment of the present disclosure. The chip 600 shown in FIG. 6 includes a processor 810 which can call and run a computer program from a memory to implement the methods according to the embodiments of the present disclosure.

Optionally, as shown in FIG. 6, the chip 600 can further include a memory 620. The processor 610 can call and run the computer program from the memory 620 to carry out the methods in the embodiments of the present disclosure.

The memory 620 can be a separate device independent of the processor 610, or can be integrated in the processor 610.

Optionally, the chip 600 can further include an input interface 630. The processor 610 can control the input interface 630 to communicate with other devices or chips, and specifically, to obtain information or data transmitted by other devices or chips.

Optionally, the chip 600 can further include an output interface 640. The processor 610 can control the output interface 640 to communicate with other devices or chips, and specifically, to output information or data to other devices or chips.

Optionally, the chip can be applied to the network device in the embodiments of the application, and the chip can carry out the corresponding processes which are implemented by the network device in the methods according to the embodiments of the present disclosure, which will not be repeated here for the sake of brevity.

Optionally, the chip can be applied to the mobile terminal/terminal device in the embodiments of the present disclosure, and the chip can carry out the corresponding processes which are implemented by the mobile terminal/terminal device in the methods of the embodiments of the present disclosure, which will not be repeated here for the sake of brevity.

It should be understood that the chip mentioned in the embodiments of the present disclosure can also be referred to as a system-level chip, a system chip, a chip system, or a system-on-chip.

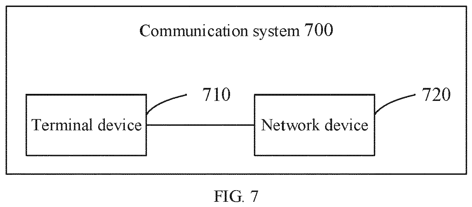

FIG. 7 is a schematic block diagram of a communication system 700 provided by an embodiment of the present disclosure. As shown in FIG. 7, the communication system 700 includes a terminal device 710 and a network device 720.

The terminal device 710 can be configured to implement the corresponding functions implemented by the terminal device in the above methods, and the network device 720 can be configured to implement the corresponding functions implemented by the network device in the above methods, which will not be repeated here for the sake of brevity.

It should be understood that the processor according to the embodiments of the present disclosure can be an integrated circuit chip with signal processing capability. In the implementations, the steps of the foregoing method embodiments can be completed by an integrated logic circuit of hardware in the processor or by instructions in a form of software. The foregoing processor can be a general-purpose processor, a Digital Signal Processor (DSP), an Application Specific Integrated Circuit (ASIC), a Field Programmable Gate Array (FPGA), other programmable logic devices, discrete gate or transistor logic device, or a discrete hardware component, which can implement the methods, steps, and logical blocks disclosed in the embodiments of the present disclosure. The general-purpose processor can be a microprocessor, any conventional processor or the like. The steps of the methods disclosed in connection with the embodiments of the present disclosure can be directly embodied in and performed by a hardware decoding processor, or can be implemented by a combination of hardware and software modules in the decoding processor. The software modules can be located in a mature storage medium in the art such as a random access memory, a flash memory, a read-only memory, a programmable read-only memory, an electrically erasable programmable memory or a register. The storage medium is located in the memory, and the processor reads information in the memory and implements the steps of the above methods in combination with the hardware thereof.

It can be understood that the memory in the embodiments of the present disclosure may be a volatile memory or a non-volatile memory, or may include both the volatile and non-volatile memories. The non-volatile memory can be a Read-Only Memory (ROM), a Programmable ROM (PROM), an erasable PROM (EPROM), an electrically EPROM (EEPROM) or a flash memory. The volatile memory may be a Random Access Memory (RAM), which is used as an external cache. By way of exemplary but not restrictive description, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) ) and a Direct Rambus RAM (DR RAM). It should be noted that the memories of the systems and methods described herein are intended to include, but are not limited to, these and any other suitable types of memories.

It should be understood that the foregoing description of the memory is exemplary rather than limiting. For example, the memory in the embodiments of the present disclosure can also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-Link DRAM (SLDRAM), a Direct Rambus RAM (DR RAM), among others. That is to say, the memory in the embodiments of the present disclosure is intended to include but is not limited to those and any other suitable types of memories.

An embodiment of the present disclosure also provides a computer-readable storage medium for storing a computer program.

Optionally, the computer-readable storage medium can be applied to the network device in the embodiments of the present disclosure, and the computer program causes a computer to perform the corresponding processes which are implemented by the network device in the methods of the embodiments of the present disclosure, which will not be repeated here for the sake of brevity.

Optionally, the computer-readable storage medium can be applied to the mobile terminal/terminal device in the embodiments of the present disclosure, and the computer program causes the computer to perform the corresponding processes which are implemented by the mobile terminal/terminal device in the methods of the embodiments of the present disclosure, which will not be repeated here for the sake of brevity.

An embodiment of the present disclosure also provides a computer program product including computer program instructions.

Optionally, the computer program product can be applied to the network device in the embodiments of the present disclosure, and the computer program instructions cause a computer to perform the corresponding processes implemented by the network device in the methods according to the embodiments of the present disclosure, which will not be repeated here for the sake of brevity.

Optionally, the computer program product can be applied to the mobile terminal/terminal device in the embodiments of the present disclosure, and the computer program instructions cause a computer to perform the corresponding processes which are implemented by the mobile terminal/terminal device in the methods of the embodiments of the present disclosure, which will not be repeated here for the sake of brevity.

An embodiment of the application also provides a computer program.

Optionally, the computer program can be applied to the network device in the embodiments of the present disclosure, and when running on a computer, the computer program causes the computer to perform the corresponding process implemented by the network device in the methods according to the embodiments of the present disclosure, which will not be repeated here for the sake of brevity.

Optionally, the computer program can be applied to the mobile terminal/terminal device in the embodiments of the present disclosure, and when running on a computer, the computer program causes the computer to perform the corresponding processes implemented by the mobile terminal/terminal device in the methods of the embodiments of the present disclosure, which will not be repeated here for the sake of brevity.

Those of ordinary skill in the art can recognize that the exemplary units and algorithm steps described in connection with the embodiments disclosed herein can be implemented in electronic hardware or a combination of computer software and the electronic hardware. Whether these functions are implemented in hardware or in software depends on the specific applications of the technical solutions and design constraints. Various methods can be used by professional technicians to implement the described functions for each specific application, and such implementations should not be considered as going beyond the scope of the present disclosure.

Those skilled in the art can clearly understand that for convenience and conciseness of the description, for the specific operating process of the systems, devices and units described above, reference can be made to corresponding processes in the foregoing method embodiments, which will not be repeated here.

It should be understood that the systems, devices, and methods disclosed in several embodiments of the present disclosure can be implemented in other manners. For example, the device embodiments described above are merely illustrative. For example, the division of the units is only a logical function division, and in actual implementations, there can be other division manners. For example, a plurality of units or components can be combined or integrated into another system, or some features can be ignored or not implemented. In addition, the coupling or direct coupling or communication connection shown or discussed herein can also be indirect coupling or communication connection through some interfaces, devices or units, and can be in electrical, mechanical or other forms.

The units described as separate components may be or may not be physically separated, and the components shown as units may be or may not be physical units, that is, they may be located in one place or may be distributed on multiple network units. Some or all of the units can be selected to achieve the objectives of the solutions of the embodiments according to actual requirements.

In addition, the functional units in the embodiments of the present disclosure can be integrated into one processing unit, or each of the units can individually exist physically, or two or more of the units can be integrated into one unit.

If implemented in the form of software functional units and sold or used as an independent product, the functions can be stored in a computer-readable storage medium. Based on such understanding, the technical solution of the present disclosure essentially, a part thereof that contributes to the prior art, or a part of the technical solution can be embodied in the form of a software product, and the computer software product is stored in a storage medium and includes instructions which enable a computer device (which may be a personal computer, a server, a network device or the like) to perform all or part of the steps of the methods described in the embodiments of the present disclosure. The foregoing storage medium includes various medium such as a USB drive, a removable hard disk, a ROM, a RAM, a magnetic disk or an optical disc that can store program codes.

Those described above are only specific implementations of the present disclosure, and the protection scope of the present disclosure is not limited thereto. Any alteration or replacement readily devised by a person skilled in the art within the technical scope disclosed in the present disclosure shall fall within the scope of the present disclosure. Therefore, the protection scope of the present disclosure shall be subject to the protection scope of the claims.

## Claims

1. A method for indicating information, comprising:
receiving, by a terminal device, a first broadcast message sent by a first cell, wherein the first broadcast message carries first indication information, and the first indication information is used to indicate whether a first type of terminal device is allowed to access the first cell.

2. The method according to claim 1, wherein,
if a value of the first indication information is a first value, it indicates that the first type of terminal device is allowed to access the first cell; or,
if the value of the first indication information is a second value, it indicates that the first type of terminal device is not allowed to access the first cell.

3. The method according to claim 1 or 2, wherein the first broadcast message further carries second indication information, and the second indication information is used for the terminal device to obtain Remaining Minimum System Information (RMSI) information.

4. The method according to claim 3, wherein in a case where the terminal device is the first type of terminal device, and the first indication information indicates that the first type of terminal device is allowed to access the first cell,
determining, by the terminal device according to the second indication information, corresponding RMSI information in a first table, wherein the RMSI information comprises at least one of scheduling information of the RMSI and the number of repetitions of the RMSI.

5. The method according to claim 3, wherein in a case where the terminal device is the first type of terminal device, and the first indication information indicates that the first type of terminal device is allowed to access the first cell,
determining, by the terminal device according to the second indication information, corresponding RMSI information in a second table, wherein the RMSI information comprises resource configuration information of a first RMSI Physical Downlink Control Channel (PDCCH).

6. The method according to claim 5, wherein the method further comprises:
receiving, by the terminal device, the first RMSI PDCCH according to the resource configuration information of the first RMSI PDCCH, and obtaining scheduling information of the RMSI and/or the number of repetitions of the RMSI from the first RMSI PDCCH.

7. The method according to claim 5 or 6, wherein the second table is different from a third table, and the third table is used for determining resource configuration information of a second RMSI PDCCH for a second type of terminal device.

8. The method according to claim 3, wherein in a case where the terminal device is a second type of terminal device,
determining, by the terminal device according to the second indication information, corresponding RMSI information in a third table, wherein the RMSI information comprises resource configuration information of a second RMSI PDCCH.

9. The method according to claim 8, wherein the method further comprises:
receiving, by the terminal device, the second RMSI PDCCH according to the resource configuration information of the second RMSI PDCCH, and obtaining scheduling information of the RMSI and/or the number of repetitions of the RMSI from the second RMSI PDCCH.

10. The method according to any one of claims 7 to 9, wherein the second type of terminal device is an enhanced Mobile Ultra-Wideband (eMBB) type terminal device.

11. The method according to any one of claims 4, 6, and 9, wherein the scheduling information of the RMSI comprises at least one of a Transport Block (TB) size, a Modulation and Coding Scheme (MCS), a time domain resource position, and a frequency domain resource position.

12. The method according to claim 3, wherein in a case where the terminal device is the first type of terminal device, and the first indication information indicates that the first type of terminal device is allowed to access the first cell,
determining, by the terminal device according to the second indication information, a bandwidth part occupied by a first RMSI PDCCH.

13. The method according to claim 12, wherein the first RMSI PDCCH occupies a first part of a first bandwidth, the first bandwidth is a bandwidth occupied by a search space of a second RMSI PDCCH, and the second RMSI PDCCH is a RMSI PDCCH for a second type of terminal device.

14. The method according to claim 13, wherein the determining, by the terminal device according to the second indication information, the bandwidth part occupied by the first RMSI PDCCH comprises:
determining, by the terminal device according to the second indication information, the first bandwidth in a third table; and
determining, by the terminal device according to the second indication information, the first part of the first bandwidth in a fourth table.

15. The method according to any one of claims 5, 6, and 12 to 14, wherein the first RMSI PDCCH is scrambled by a first System Information Radio Network Temporary Identifier (SI-RNTI);
wherein the first SI-RNTI is different from a second SI-RNTI, the second SI-RNTI is used for scrambling a second RMSI PDCCH, and the second RMSI PDCCH is a RMSI PDCCH for a second type of terminal device.

16. The method according to any one of claims 1 to 15, wherein the first broadcast message is a MIB message.

17. The method according to any one of claims 1 to 16, wherein the first type of terminal device comprises a New Radio light (NR-light) type terminal device.

18. A method for indicating information, comprising:
sending, by a network device, a first broadcast message, wherein the first broadcast message carries first indication information, and the first indication information is used to indicate whether a first type of terminal device is allowed to access a first cell.

19. The method according to claim 18, wherein,
if a value of the first indication information is a first value, it indicates that the first type of terminal device is allowed to access the first cell; or,
if the value of the first indication information is a second value, it indicates that the first type of terminal device is not allowed to access the first cell.

20. The method according to claim 18 or 19, wherein the first broadcast message further carries second indication information, and the second indication information is used for the terminal device to obtain RMSI information.

21. The method according to any one of claims 18 to 20, wherein the first broadcast message is a MIB message.

22. The method according to any one of claims 18 to 21, wherein the first type of terminal device is a NR-light type terminal device.

23. An apparatus for indicating information, applied to a terminal device, the apparatus comprising:
a receiving unit, configured to receive a first broadcast message sent by a first cell, wherein the first broadcast message carries first indication information, and the first indication information is used to indicate whether a first type of terminal device is allowed to access the first cell.

24. The apparatus according to claim 23, wherein,
if a value of the first indication information is a first value, it indicates that the first type of terminal device is allowed to access the first cell; or,
if the value of the first indication information is a second value, it indicates that the first type of terminal device is not allowed to access the first cell.

25. The apparatus according to claim 23 or 24, wherein the first broadcast message further carries second indication information, and the second indication information is used for the terminal device to obtain RMSI information.

26. The apparatus according to claim 25, wherein in a case where the terminal device is the first type of terminal device, and the first indication information indicates that the first type of terminal device is allowed to access the first cell,
the apparatus further comprises a determining unit, configured to determine corresponding RMSI information in a first table according to the second indication information, wherein the RMSI information comprises at least one of scheduling information of the RMSI and the number of repetitions of the RMSI.

27. The apparatus according to claim 25, wherein in a case where the terminal device is the first type of terminal device, and the first indication information indicates that the first type of terminal device is allowed to access the first cell,
the apparatus further comprises a determining unit, configured to determine corresponding RMSI information in a second table according to the second indication information, wherein the RMSI information comprises resource configuration information of a first RMSI PDCCH.

28. The apparatus according to claim 27, wherein the receiving unit is further configured to receive the first RMSI PDCCH according to the resource configuration information of the first RMSI PDCCH, and obtain scheduling information of the RMSI and/or the number of repetitions of the RMSI from the first RMSI PDCCH.

29. The apparatus according to claim 27 or 28, wherein the second table is different from a third table, and the third table is used for determining resource configuration information of a second RMSI PDCCH for a second type of terminal device.

30. The apparatus according to claim 25, wherein in a case where the terminal device is a second type of terminal device,
the apparatus further comprises a determining unit, configured to determine corresponding RMSI information in a third table according to the second indication information, wherein the RMSI information comprises resource configuration information of a second RMSI PDCCH.

31. The apparatus according to claim 30, wherein the receiving unit is further configured to receive the second RMSI PDCCH according to the resource configuration information of the second RMSI PDCCH, and obtain scheduling information of the RMSI and/or the number of repetitions of the RMSI from the second RMSI PDCCH.

32. The apparatus according to any one of claims 29 to 31, wherein the second type of terminal device is an eMBB type terminal device.

33. The apparatus according to any one of claims 26, 28, and 31, wherein the scheduling information of the RMSI comprises at least one of a TB size, a MCS, a time domain resource position, and a frequency domain resource position.

34. The apparatus according to claim 25, wherein in a case where the terminal device is the first type of terminal device, and the first indication information indicates that the first type of terminal device is allowed to access the first cell,
the apparatus further comprises a determining unit, configured to determine a bandwidth part occupied by a first RMSI PDCCH according to the second indication information.

35. The apparatus according to claim 34, wherein the first RMSI PDCCH occupies a first part of a first bandwidth, the first bandwidth is a bandwidth occupied by a search space of a second RMSI PDCCH, and the second RMSI PDCCH is a RMSI PDCCH for a second type of terminal device.

36. The apparatus according to claim 35, wherein the determining unit is configured to determine the first bandwidth in a third table according to the second indication information; and determine the first part of the first bandwidth in a fourth table according to the second indication information.

37. The apparatus according to any one of claims 27, 28, and 34 to 36, wherein the first RMSI PDCCH is scrambled by a first SI-RNTI;
wherein the first SI-RNTI is different from a second SI-RNTI, the second SI-RNTI is used for scrambling a second RMSI PDCCH, and the second RMSI PDCCH is a RMSI PDCCH for a second type of terminal device.

38. The apparatus according to claims 23 to 37, wherein the first broadcast message is a MIB message.

39. The apparatus according to claims 23 to 38, wherein the first type of terminal device is a NR-light type terminal device.

40. An apparatus for indicating information, applied to a network device, the apparatus comprising:
a sending unit, configured to send a first broadcast message, wherein the first broadcast message carries first indication information, and the first indication information is used to indicate whether a first type of terminal device is allowed to access a first cell.

41. The apparatus according to claim 40, wherein:
if a value of the first indication information is a first value, it indicates that the first type of terminal device is allowed to access the first cell; or,
if the value of the first indication information is a second value, it indicates that the first type of terminal device is not allowed to access the first cell.

42. The apparatus according to claim 40 or 41, wherein the first broadcast message further carries second indication information, and the second indication information is used for the terminal device to obtain RMSI information.

43. The apparatus according to any one of claims 40 to 42, wherein the first broadcast message is a MIB message.

44. The apparatus according to any one of claims 40 to 43, wherein the first type of terminal device is a NR-light type terminal device.

45. A terminal device, comprising: a processor and a memory, wherein the memory is configured to store a computer program, and the processor is configured to call and run the computer program stored in the memory to perform the method according to any one of claims 1 to 17.

46. A network device, comprising: a processor and a memory, wherein the memory is configured to store a computer program, and the processor is configured to call and run the computer program stored in the memory to perform the method according to any one of claims 18 to 22.

47. A chip, comprising: a processor, configured to call and run a computer program from a memory, to cause a device installed with the chip to perform the method according to any one of claims 1 to 17.

48. A chip, comprising: a processor, configured to call and run a computer program from a memory, to cause a device installed with the chip to perform the method according to any one of claims 18 to 22.

49. A computer-readable storage medium, configured to store a computer program, wherein the computer program causes a computer to perform the method according to any one of claims 1 to 17.

50. A computer-readable storage medium, configured to store a computer program, wherein the computer program causes a computer to perform the method according to any one of claims 18 to 22.

51. A computer program product, comprising computer program instructions, wherein the computer program instructions cause a computer to perform the method according to any one of claims 1 to 17.

52. A computer program product, comprising computer program instructions, wherein the computer program instructions cause a computer to perform the method according to any one of claims 18 to 22.

53. A computer program, wherein the computer program causes a computer to perform the method according to any one of claims 1 to 17.

54. A computer program, wherein the computer program causes a computer to perform the method according to any one of claims 18 to 22.
